# EUROPÄISCHE PATENTSCHRIFT

(11) **EP 0 243 688 B1**
(45) Veröffentlichungstag und Bekanntmachung des Hinweises auf die Patenterteilung: **08.09.1993**
(21) Anmeldenummer: 87104513.4
(22) Anmeldetag: 26.03.1987
(51) Int. Cl.: B29C 67/14, B65H 35/00

(54) **Vorrichtung zum Ablegen eines vorimprägnierten Faserbandes**
Device for laying down a pre-impregnated fibre web
Dispositif pour déposer un ruban de fibres préimprégné

(30) Priorität: 28.04.1986 DE 3614365
(43) Veröffentlichungstag der Anmeldung: 04.11.1987
(73) Patentinhaber: Deutsche Aerospace Airbus Gesellschaft mit beschränkter Haftung, 21129 Hamburg (DE)
(72) Erfinder: Lengen, Wilhelm, D-2107 Rosengarten (DE); Oberfranz, Rudolf, D-2110 Buchholz (DE); Puritz, Wolfgang, D-2150 Buxtehude (DE)

(56) Entgegenhaltungen:
- DE-A- 1 911 615
- FR-A- 2 515 106
- FR-A- 2 539 122
- US-A- 4 285 752
- PLASTICS ENGINEERING

## Beschreibung

Die Erfindung bezieht sich auf eine Vorrichtung zum Ablegen eines vorimprägnierten Faserbandes zur Herstellung eines Bauteils aus faserverstärktem Kunststoff.

Durch die DE-OS 1 911 615 ist eine Vorrichtung zum Auftragen einer doppelseitigen Haftklebefolie bekannt, wodurch bei Rotations-Druckmaschinen die betreffenden Druckplatten auf den dafür vorgesehenen Sätteln befestigt werden. Diesem Dokument ist eine Schneideinrichtung mit einem Kreismesser zu entnehmen, die zum Trennen der Klebefolie dient. Hierbei ist von Nachteil, daß die Folie mit diesem Messer nicht unter verschiedenen Winkeln abgetrennt werden kann.

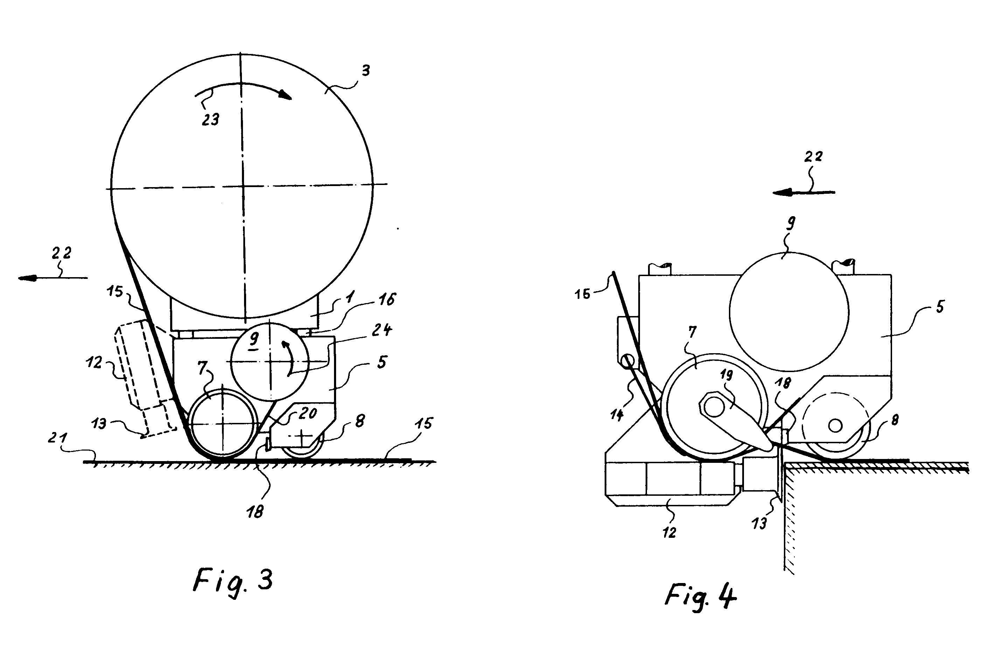

Aus der US-Zeitschrift Plastics Engineering, Mai 1981, Seiten 39,40 Figuren 4 bis 6 und Beschreibung geht das Prinzip einer Vorrichtung zum Ablegen eines mit aushärtbarem Kunststoff vorimprägnierten Faserbandes (Prepreg) zur Herstellung eines Bauteils aus faserverstärktem Kunststoff hervor, wobei die Vorrichtung durch den um mehrere Achsen schwenkbaren Arm eines Industrieroboters geführt wird. Die Vorrichtung ist als austauschbare Zusatzvorrichtung ausgebildet und weist daher einen Adapter auf, der mit dem Arm des Roboters koppelbar ist. Diesem Dokument sind jedoch keine Wege zur Ausbildung insbesondere einer Schneideinrichtung zum Trennen des Faserbandes unter verschiedenen Winkeln entnehmbar.

Die FR-A-2 515 106 zeigt eine Vorrichtung zum Ablegen eines vorimprägnierten Faserbandes zur Herstellung eines Bauteils aus faserverstärktem Kunststoff. Diese Vorrichtung weist eine Vorratsspule für das Faserband und mindestens eine Aufnahmespule für ein Trägerband sowie eine Andrückrolle auf und wirkt mit einer programmsteuerbaren Portalvorrichtung zusammen, wobei die Funktionen der Vorrichtung zum Ablegen des Bandes gleichfalls programmsteuerbar sind. Die hierzu gehörende Schneideinrichtung weist ein Messer auf, das zum Führen von Schnitten unter beliebigem Winkel um seine Achse schwenkbar ausgebildet ist, was eine recht aufwendige Gestaltung der Vorrichtung zur Folge hat. Infolge der hier angewendeten technischen Mittel für das schwenkbare Messer sowie infolge eigener Antriebe für die Vorrats- und Aufnahmespule, ist diese Vorrichtung insbesondere aus Gewichtsgründen zur Verwendung an einem Roboterarm nicht geeignet.

Demgemäß liegt der Erfindung die Aufgabe zugrunde, eine gattungsgemäße an einem Roboterarm verwendbare Vorrichtung so auszubilden, daß diese mit vergleichsweise geringem Aufwand ein Trennen des Faserbandes mit unterschiedlichen Winkeln ermöglicht.

Diese Aufgabe wird bei einer gattungsgemäßen Vorrichtung durch die kennzeichnenden Merkmale der Patentansprüche 1 und 4 gelöst.

Hierbei ist insbesondere von Vorteil, daß sich die erzielte Vereinfachung günstig auf das Baugewicht der Vorrichtung auswirkt, wodurch die Abweichungen von einer per Programm vorgegebenen Soll-Bewegung in jedem Falle innerhalb des beim Laminieren zulässigen Toleranzbereiches bleiben.

Weitere Ausgestaltungen der Erfindung sind in den Unteransprüchen angegeben.

Die Erfindung ist anhand der Zeichnung dargestellt und in der Beispielbeschreibung näher erläutert. Es zeigen
- Fig. 1: eine Ansicht einer Laminiervorrichtung,
- Fig. 2: die Ansicht II nach Fig.1,
- Fig. 3: schematisch eine Vorrichtung beim Ablegen eines Bandes,
- Fig. 4: schematisch die Vorrichtung nach Fig.3 am Ende eines Ablegevorganges,
- Fig. 5: eine Vorrichtung mit einem Messerbalken,
- Fig. 6: die Ansicht VI nach Fig.5,
- Fig. 7: die Ansicht VII nach Fig.5,
- Fig. 8: den Schnitt VIII nach Fig.5,
- Fig. 9: eine Vorrichtung mit Messerwalzen und
- Fig. 10: die Ansicht X nach Fig.9.

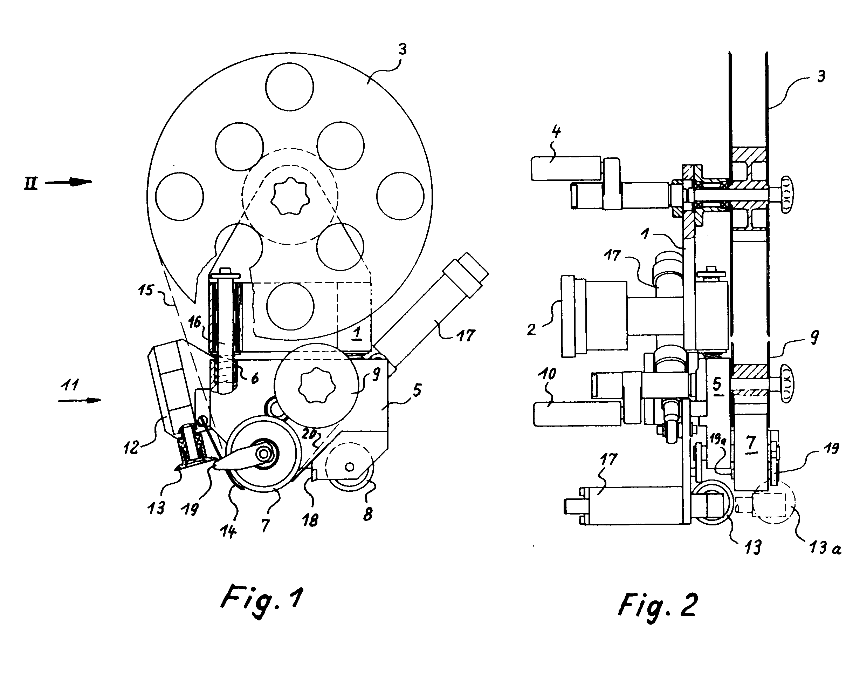

Die Figuren 1 und 2 zeigen eine zum Ablegen eines Faserbandes 15 vorgesehene Vorrichtung, bestehend aus einem Trägerteil 1, das mittels eines Adapters 2 am Arm eines hier nicht gezeigten Industrieroboters angebracht ist. Am Trägerteil 1 ist eine Vorratsspule 3 drehbar gelagert, zu deren Betätigung ein Druckluftmotor 4 vorgesehen ist. Gegenüber dem Trägerteil 1 ist ein Arbeitsteil 5 in vertikaler Richtung verschiebbar geführt, wobei Führungen 16 mit Federn 6 derart vorgesehen sind, daß eine Bewegung des Arbeitsteils 5 zum Trägerteil 1 hin gegen die Kraft dieser Federn 6 erfolgt. Das Arbeitsteil 5 weist zwei Andrückrollen 7 und 8 sowie eine Aufwickelspule 9 auf, zu deren Betätigung ein Druckluftmotor 10 vorgesehen ist. Am Arbeitsteil 5 ist weiterhin eine Schneideinheit 11, im wesentlichen bestehend aus einem Messerträger 12, mit einem Kreismesser 13 und einem Abstreifblech 14, angeordnet. Zum Abschneiden des Bandes 15 ist das Messer 13 mittels eines Zylinders 17 quer zur Bandrichtung bis zur Position 13a verfahrbar. Die in Fig. 1 in ihrer Ruhestellung gezeigte Schneideinheit 11 kann durch einen Druckluftzylinder 17 in Schneidposition geschwenkt werden, in der das Messer 13 mit einer Schneidkante 18 zusammenwirkt. Beim Schwenken der Schneideinheit 11 wird gleichzeitig ein damit starr verbundener Hebel 19 mit einem Stift 19a geschwenkt. Auf der Spule 3 befindet sich ein Vorrat des Bandes 15, das durch ein gemeinsam mit diesem aufgewickeltes Trägerband 20 abgestützt ist.

Figur 3 zeigt schematisch eine Vorrichtung beim Ablegen des Bandes 15 auf einen innerhalb einer Klebevorrichtung befindlichen Schichtaufbau 21. Dabei wird die Ablegevorrichtung durch den Roboter an einer per Programmeingabe definierten Stelle derart aufgesetzt, daß das Band 15 durch die Rollen 7 und 8 fest auf den Schichtaufbau gepreßt wird. Hierdurch haftet das an sich recht klebrige Band an dem Aufbau 21. Wird nun die Vorrichtung infolge eines entsprechenden Maschinenbefehls durch den Roboter in Pfeilrichtung 22 parallel zum Aufbau 21 bewegt, so wird das Band 15 von der Spule 3 abgerollt und programmgemäß abgelegt. Dabei übt der Motor 4 ein in Pfeilrichtung 23 aus die Spule 3 wirkendes Moment aus, das der Abwickelbewegung des Bandes 15 zu dessen Straffung entgegenwirkt. Die Aufwickelspule 9 wird durch den Motor 10 in Pfeilrichtung 24 gedreht. Hierdurch wird das nicht mehr benötigte Trägerband 20 auf der Spule 9 gesammelt. Hat die Vorrichtung das Ende des Schichtaufbaues erreicht, so wird die vorgenannte Bewegung programmgemäß angehalten.

Figur 4 zeigt das Arbeitsteil 5 der Vorrichtung am Ende des Schichtaufbaues 21, nachdem die in Pfeilrichtung 22 erfolgte Ablegebewegung beendet ist. In dieser Stellung der Vorrichtung wird der Messerträger 12 mit dem Kreismesser 13 mittels des über ein hier nicht gezeigtes Magnetventil angesteuerten Zylinders 17 in die gezeigte Schneidposition gebracht, in der das Faserband 15 mittels des hier nicht sichtbaren Stiftes 19a an die Schneidkante 18 geführt ist. Anschließend erfolgt das Abtrennen des Bandes durch Betätigung des Zylinders 17. Dabei rollt das Messer 13 an der Kante 18 entlang und trennt die Fasern des Bandes 15 sauber ab. Nach dem Trennen wird durch das Abstreifblech 14 verhindert, daß sich das vorrichtungsseitige Ende des Bandes 15 von der Rolle 7 löst. Je nach Fertigungsvorschrift des betreffenden Bauteils wird der Ablegevorgang wiederholt, bis die vorgesehene Dicke des Laminats erreicht ist.

Eine hier nicht gezeigte Ausgestaltung der Erfindung besteht darin, daß die Spulen 3 und 9 innerhalb einer leicht austauschbaren Bandkasette angeordnet sind, wobei die Kasette, entsprechend einer vorgesehenen Variante wiederverwendbar ausgebildet ist. Hierdurch kann, wenn der Bandvorrat erschöpft ist, sehr schnell eine Kasette mit einem neuen Band 15 eingesetzt werden.

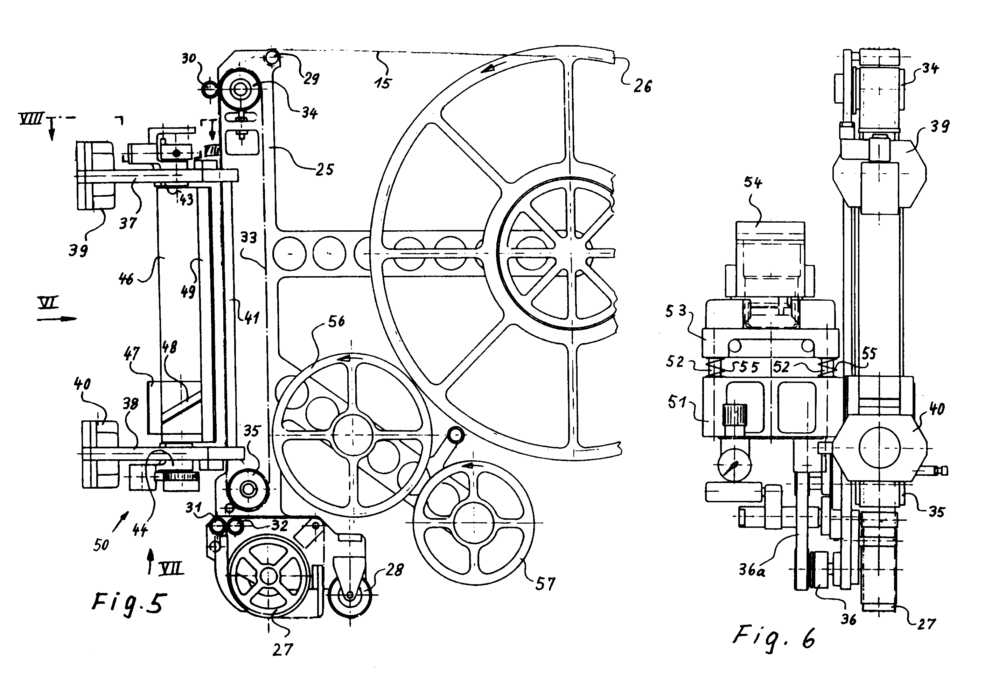

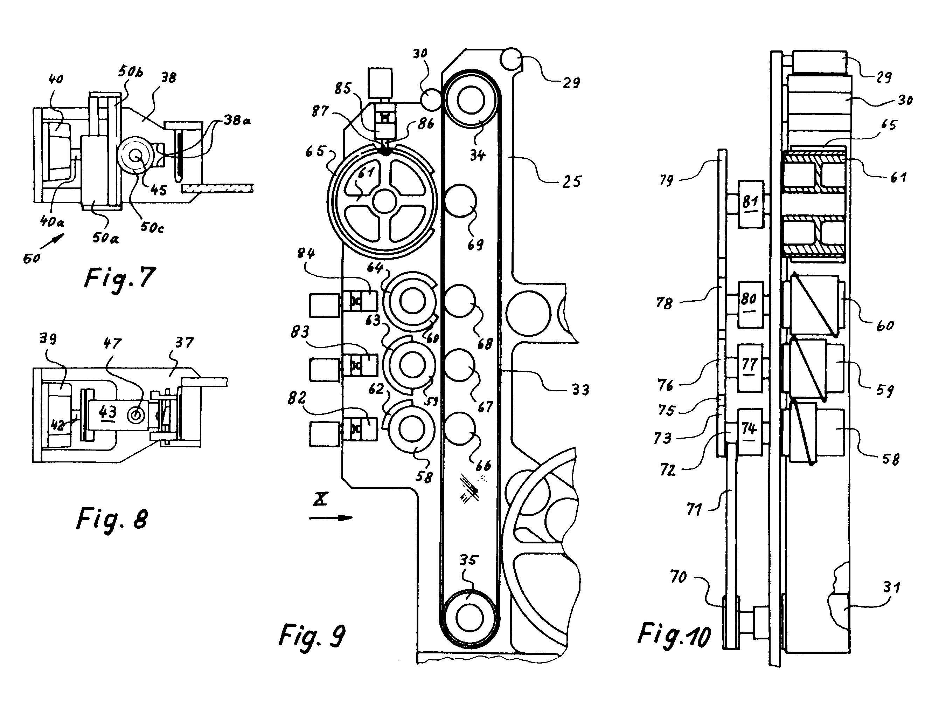

Die Figuren 5 und 6 zeigen eine andere Ausgestaltung der Vorrichtung, wobei die Bandbewegung während des Schneidvorganges angehalten wird. Diese Vorrichtung besteht im wesentlichen aus einem von einem Roboterarm getragenen Gestell 25, an dem die einzelnen Funktions-Gruppen bzw. -Elemente angeordnet sind. Das Band 15 befindet sich auf einer Vorratsspule 26 und wird beim Ablegen durch Andrückrollen 27 und 28 auf die bereits abgelegten Schichten eines herzustellenden Laminates gepreßt. Auf seinem Wege wird das Band 15 von der Vorratsspule 26 zu der Andrückrolle 27 mittels Führungsrollen 29,30,31 und 32 über ein Endlosband 33 geleitet, das über zwei achsparallele Rollen 34 und 35 von gleichem Durchmesser läuft, wovon die Rolle 34 im oberen Teil der Vorrichtung und die Rolle 35 senkrecht darunter im unteren Teil der Vorrichtung angeordnet ist. Die Andrückrolle 27 treibt die Rolle 35 und damit das Endlosband 33 über eine Magnetkupplung 36 und einen Zahnriemen 36a an. Die Drehgeschwindigkeit der Rollen 34,35 ist so gewählt, daß sich die Bänder 15 und 33 während des Ablegevorganges auf der zwischen den Rollen 30,34 einerseits und 31,32 andererseits liegenden Strecke mit gleicher Geschwindigkeit bewegen.

An dem Gestell 25 sind Träger 37 und 38 mit Pneumatik-Zylindern 39 und 40 sowie eine Schneidschiene 41 befestigt. Die Zylinder 39,40 wirken je über eine Stange, auf in den Trägern 37 und 38 geführte Gleitstücke 43 und 44. Diese Gleitstücke 43,44 weisen Lager auf, in denen ein Messerbalken 46 um seine Längsachse drehbar gelagert ist. Der Messerbalken 46 ist von annähernd quadratischem Querschnitt und trägt verschiedene Messer 47,48 und 49. Mittels eines Antriebes 50 kann der Balken 46 jeweils schrittweise um 90° gedreht werden. Das Gestell 25 ist fest mit einem Arbeitsteil 51 verbunden, das aufgrund von Führungsstäben 52 gegenüber einem Trägerteil 53 mit einem Adapter 54 vertikal verschiebbar ist. Infolge von Druckfedern 55 werden entsprechende Federkräfte wirksam, wenn sich die Teile 51 und 52 einander nähern. Die Vorrichtung wird mittels des Adapters 54 an einem nicht gezeigten Roboterarm angebracht. Der mit dieser Vorrichtung durchführbare Arbeitsablauf entspricht im Prinzip dem im Zusammenhang mit den Figuren 1 bis 4 beschriebenen. Auch diese Vorrichtung wird mit dem Roboterarm in Ablegerichtung geführt, wobei das Band 15 von der Vorratsspule 26 abrollt. Dabei werden wieder Höhenabweichungen durch die Federn 55 ausgeglichen. Diese Vorrichtung weist zwei Aufwickelspulen 56 und 57 auf, damit auch Faserbänder 15 verarbeitet werden können, die mit einer Trägerfolie und einer Schutzfolie versehen sind. Soll das Band 15 programmgemäß an einer bestimmten Stelle abgeschnitten werden, so wird der Verlegevorgang automatisch angehalten, wenn die vorbestimmte Schnittstelle das betreffende Messer 49 erreicht hat. Dann werden die Pneumatikzylinder 39 und 40 betätigt, so daß das Messer 49 fest gegen das Band 15 gedrückt wird. Dabei dient das aus einem geeigneten elastischen Material bestehende Endlosband 33 als durch die Schiene 41 abgestützte Schneidunterlage. Da die Messer 47,48 und 49 unterschiedliche Schräglagen aufweisen, können hiermit Schrägschnitte mit unterschiedlichem Winkel gegenüber der Bandrichtung ausgeführt werden. Durch die Imprägnierung des Bandes 15 mit noch nicht ausgehärtetem Kunstharz kommt es zu einer Haftklebung zwischen beiden Bändern. Diese Haftklebung wird durch Schälkräfte wieder gelöst, wenn beide Bänder 15 und 33 im Bereich der Rollen 32 und 35 getrennt werden. Durch die mitlaufende Schneidunterlage in Form des Endlosbandes 33 wird vermieden, daß die Haftklebung zwischen der Schneidunterlage und dem Band 15 durch Schubkräfte gelöst werden muß.

Figur 7 zeigt den Träger 38 mit dem Zylinder 40 zur Betätigung des hier nicht sichtbaren Gleitstücks 44. Dieses weist ein Lager für den unteren Zapfen 45 des Messerbalkens 46 auf und ist mittels des Zylinders 40 über die Stange 40a in einer Führung mit den Flächen 38a verschiebbar. Mit dem Gleitstück 44 ist ein Pneumatikzylinder 50a fest verbunden, der über eine Zahnstange 50b auf ein mit dem Zapfen 45 fest verbundenes Zahnrad 50c wirkt. Damit kann der Messerbalken 46 bei entsprechender Ansteuerung des Zylinders 50a programmgemäß um seine Längsachse geschwenkt werden.

Figur 8 zeigt den oberen Träger 37 mit dem Zylinder 39, der über die Stange 42 das Gleitstück 43 betätigt, in dem der obere Zapfen 47 des Messerbalkens 46 gelagert ist.

Die Figuren 9 und 10 zeigen eine ähnliche Vorrichtung mit beim Schneiden weiterlaufender Bandbewegung, wobei jedoch eine andere Schneideinrichtung vorgesehen ist. Hier sind auf dem vorbeschriebenen Gestell 25 mit dem Endlosband 33 und den Rollen 34 und 35 sowie den Rollen 29 und 30 u.s.w. mehrere um horizontale Achsen drehbare Messerwalzen 58,59,60 und 61 angeordnet. Jeweils auf den zylindrischen Mantelflächen der einzelnen Walzen sind schraubenförmige Messer 62,63,64 und 65 angebracht, denen um horizontale Achsen drehbare Stützwalzen 66,67,68 und 69 auf der Innenseite des Endlosbandes 33 gegenüberliegen. Der Antrieb der Messerwalzen erfolgt durch eine starr mit der Rolle 35 verbundene Riemenscheibe 70 mit einem Treibriemen 71, der auf eine Antriebswelle 72 mit einem Zahnrad 73 über eine Magnetkupplung 74 auf die Messerwalze 58 wirkt. Über ein zwischengeschaltetes Ritzel 75 wird ein weiteres Zahnrad 76 angetrieben, dessen Drehung über eine weitere Magnetkupplung 77 auf die Messerwalze 59 übertragen wird. Auch die anderen Messerwalzen 60 und 61 werden analog hierzu über Zahnräder 78 und 79 sowie Magnektupplungen 80 und 81 angetrieben. Jeder Messerwalze ist ein Fühlerschalter 82,83,84 und 85 zugeordnet, wodurch die jeweils betreffende Magnetkupplung 74,77,80,81 geschaltet wird. Am Beispiel der Messerwalze 61 ist die Wirkungweise der vorgenannten Fühlerschalter erkennbar. In der gezeigten Ruhestellung taucht der Fühler 86 in eine auf der Mantelfläche der Messerwalze 61 angebrachte Vertiefung 87 ein. In dieser Position des Fühlers 86 sind die Kontakte des Schalters 85 geöffnet. Bei Drehung der Messerwalzes 61 wird der Schalter 85 durch Eindrücken des Fühlers 86 geschlossen. Jede Magnetkupplung 74,77,80,81 ist weiterhin durch eine eigene Leitung von der hier nicht gezeigten Steuer-Einheit des Roboters aus ansteuerbar.

## Patentansprüche

1. Vorrichtung zum Laminieren eines Bauteils aus einem vorimprägnierten Faserband, die zur Verwendung an einem Roboterarm mit einem Adapter versehen ist und im wesentlichen eine Vorratsspule für das Faserband und mindestens eine Aufnahmespule für ein Trägerband sowie eine Andrückrolle und eine Schneideinrichtung zum Abtrennen des Bandes aufweist, **gekennzeichnet** durch ein Trägerteil (1), mit dem der Adapter (54) fest verbunden ist, und durch ein Arbeitsteil (51), das die Vorratsspule (26), die Andrückrolle (27,28) und die Schneideinrichtung trägt, wobei das Arbeitsteil (51) gegenüber dem Trägerteil (53) durch Führungselemente (52) vertikal geführt ist und diese Führung durch Federn (55) derart belastet ist, daß die Federn (55) einer Verkleinerung des zwischen Trägerteil (53) und Arbeitsteil (51) bestehenden Abstandes entgegenwirken, wobei alle innerhalb der Vorrichtung angeordneten Antriebe ansteuerbar ausgeführt sind und die Schneideinrichtung einen zur Auswahl eines Messers (47,48,49) um seine Längsachse drehbaren und zum Schneiden des Faserbandes (15) quer zu seiner Längsrichtung gegen ein antreibbares Endlosband (33) verfahrbaren Messerbalken (46) aufweist, dessen Messer (47,48,49) mit unterschiedlichen Winkeln gegenüber der Verlegerichtung des Faserbandes (15) orientiert sind, wobei das zu trennende Faserband (15) zwischen einem Messer (47,48,49) und dem Endlosband (33) verläuft, so daß das Faserband (15) beim Schneidvorgang mittels des in das Endlosband um eine vorbestimmte Tiefe eindringenden Messers (47,48,49) abgetrennt wird.

2. Vorrichtung nach Anspruch 1, dadurch **gekennzeichnet,** daß zum Abstützen des Endlosbandes (33) eine Schneidschiene (41) vorgesehen ist, die den im Bereich des Messerbalkens (46) befindlichen Teil des Endlosbandes (33) auf seiner dem Messerbalken (46) abgewandten Seite überdeckt.

3. Vorrichtung nach Anspruch 1 oder 2, dadurch **gekennzeichnet,** daß zum Verfahren des Messerbalkens (46) Pneumatikzylinder (39,40) vorgesehen sind.

4. Vorrichtung zum Laminieren eines Bauteils aus einem vorimprägnierten Faserband, die zur Verwendung an einem Roboterarm mit einem Adapter versehen ist und im wesentlichen eine Vorratsspule für das Faserband und mindestens eine Aufnahmespule für ein Trägerband sowie eine Andrückrolle und eine Schneideinrichtung zum Abtrennen des Bandes aufweist, **gekennzeichnet,** durch ein Trägerteil (1), mit dem der Adapter (54) fest verbunden ist, und durch ein Arbeitsteil (51), das die Vorratsspule (26), die Andrückrolle (27,28) und die Schneideinrichtung trägt, wobei das Arbeitsteil (51) gegenüber dem Trägerteil (53) durch Führungselemente (52) vertikal geführt ist und diese Führung durch Federn (55) derart belastet ist, daß die Federn (55) einer Verkleinerung des zwischen Trägerteil (53) und Arbeitsteil (51) bestehenden Abstandes entgegenwirken, wobei alle innerhalb der Vorrichtung angeordneten Antriebe ansteuerbar ausgeführt sind und die Schneideinrichtung mindestens eine Messerwalze (58,59,60,61) mit einem schraubenförmigen Messer (62,63,64,65) aufweist, das mit einem antreibbaren jeweils im Bereich eines Messers (62,63,64,65) durch eine Stützrolle (66,67,68,69) abgestützten Endlosband (33) zusammenwirkt, wobei das zu trennende Faserband (15) zwischen einem Messer (62,63,64,65) und dem Endlosband (33) verläuft, so daß das Faserband (15) beim Schneidvorgang mittels des in das Endlosband um eine vorbestimmte Tiefe eindringenden Messers (62,63,64,65) abgetrennt wird.

5. Vorrichtung nach Anspruch 4, dadurch **gekennzeichnet,** daß zum Antrieb der Messerwalzen (58,59,60,61) jeweils eine Magnetkupplung (74,77,80,81) vorgesehen ist.

## Claims

1. Laminating device for a component of pre-impregnated fibre band, which is provided with an adapter for use on a robot arm and which substantially comprises a storage spool for the fibre band and at least one receiving spool for a support band as well as a pressure roller and a cutting device for separating the band, **characterised by** a support element (1) to which the adapter (54) is firmly connected, and by a working part (51) which supports the storage spool (26), the pressure roller (27, 28) and the cutting device, whereby the working part (51) is guided vertically relative to the support element (53) by guide elements (52), and this guide is loaded by springs (55) in such a manner that the springs (55) counteract a reduction of the gap between support element (53) and working part (51), whereby all drives within the device are arranged to be controllable, and the cutting device has a knife bar (46), which is rotatable around its longitudinal axis for selecting a knife (47, 48, 49) and movable transversely to its longitudinal direction towards a driven continuous band (33) for cutting the fibre band, the knives (47, 48, 49) of which are oriented at different angles to an application direction of the fibre band (15), whereby the fibre band (15) to be separated extends between a knife (47, 48, 49) and the continuous band (33), so that the fibre band (15) is separated during the cutting process by means of the knife (47, 48, 49) which penetrates the continuous band to a specified depth.

2. Device according to claim 1, **characterised in that** a cutting rail (41) is provided for supporting the continuous band (33), which rail overlaps the part of the continuous band (33) located in the area of the knife bar (46) at its side facing away from the knife bar (46).

3. Device according to claim 1 or 2, **characterised in that** pneumatic cylinders (39, 40̸) are provided for the movement of the knife bar (46).

4. Laminating device for a component of pre-impregnated fibre band, which is provided with an adapter for use on a robot arm and which substantially comprises a storage spool for the fibre band and at least one receiving spool for a support band as well as a pressure roller and a cutting device for separating the band, **characterised by** a support element (1) to which the adapter (54) is firmly connected, and by a working part (51) which supports the storage spool (26), the pressure roller (27, 28) and the cutting device, whereby the working part (51) is guided vertically relative to the support element (53) by guide elements (52), and this guide is loaded by springs (55) in such a manner that the springs (55) counteract a reduction of the gap between support element (53) and working part (51), whereby all drives within the device are arranged to be controllable, and the cutting device has at least one knife bar (58, 59, 60̸, 61) with one screwshaped knife (62, 63, 64, 65) which cooperates with a driven continuous band (33), which is supported in a respective area of a knife (62, 63, 64, 65) by a support roller (66, 67, 68, 69), whereby the fibre band (15) to be separated extends between a knife (62, 63, 64, 65) and the continuous band (33), so that the fibre band (15) is separated during the cutting process by means of a knife (62, 63, 64, 65) which penetrates the continuous band to a specified depth.

5. Device according to claim 4, **characterised in that** a respective magneto-coupling (74, 77, 80̸, 81) is provided for driving the knife rollers (58, 59, 60̸, 61)

## Revendications

1. Dispositif pour la stratification d'un élément réalisé à partir de bande de fibres préimprégnée, dispositif muni d'un dispositif d'adaptation pour son utilisation sur un bras de robot et comportant pour l'essentiel une bobine d'alimentation de la bande de fibre et au moins une bobine de réception d'une bande-support ainsi qu'un cylindre applicateur et un dispositif de coupe pour couper la bande, caractérisé par une partie-support (1) à laquelle le dispositif d'adaptation (54) est relié fermement et une partie de travail (51) qui porte la bobine d'alimentation (26), le cylindre applicateur (27, 28) et le dispositif de coupe, la partie de travail (51) étant guidée verticalement par rapport à la partie-support (53) au moyen d'éléments de guidage (52) et le dispositif de guidage étant sollicité par des ressorts (55) de manière telle que les ressorts (55) agissent à l'encontre d'une diminution de l'espace entre la partie-support (53) et la partie de travail (51), tous les dispositifs d'entraînement du dispositif étant commandés et le dispositif de coupe comportant un porte-lames (46) qui est mobile en rotation autour de son axe longitudinal pour la sélection d'une lame (47, 48, 49) et se déplace perpendiculairement à son axe longitudinal en direction d'une bande sans fin (33) entraînée pour couper la bande de fibres (15), porte-lames dont les lames (47, 48, 49) sont orientées avec des angles différents par rapport à la direction d'application de la bande de fibres (15), la bande de fibres (15) à couper passant entre une lame (47, 48, 49) et la bande sans fin (33) de manière telle que, lors de la coupe, la bande de fibres (15) soit coupée par la lame (47, 48, 49) qui pénètre d'une profondeur prédéterminée dans la bande sans fin.

2. Dispositif selon la revendication 1, caractérisé par le fait qu'il est prévu, comme appui pour la bande sans fin (33), un rail de coupe (41) qui couvre la partie de la bande sans fin (33) située dans la zone du porte-lame (46), du côté de la bande sans fin opposé au porte-lames (46).

3. Dispositif selon la revendication 1 ou 2, caractérisé par le fait qu'il est prévu un vérin pneumatique (39, 40) pour le déplacement du porte-lames (46).

4. Dispositif pour la stratification d'un élément réalisé à partir de bande de fibres préimprégnée, dispositif muni d'un dispositif d'adaptation pour son utilisation sur un bras de robot et comportant pour l'essentiel une bobine d'alimentation de la bande de fibre et au moins une bobine de réception d'une bande-support ainsi qu'un cylindre applicateur et un dispositif de coupe pour couper la bande, caractérisé par une partie-support (1) à laquelle le dispositif d'adaptation (54) est relié fermement et une partie de travail (51) qui porte la bobine d'alimentation (26), le cylindre applicateur (27, 28) et le dispositif de coupe, la partie de travail (51) étant guidée verticalement par rapport à la partie-support (53) au moyen d'éléments de guidage (52) et le dispositif de guidage étant sollicité par des ressorts (55) de manière telle que les ressorts (55) agissent à l'encontre d'une diminution de l'espace entre la partie-support (53) et la partie de travail (51), tous les dispositifs d'entraînement du dispositif étant commandés et le dispositif de coupe comportant au moins un cylindre porte-lames (58, 59, 60, 61) muni d'un couteau hélicoÏdal (62, 63, 64, 65) qui coopère avec une bande sans fin (33) entraînée supportée par un cylindre d'appui (66, 67, 68, 69) dans la région d'un couteau (62, 63, 64, 65), la bande de fibres (15) à couper passant entre une lame (62, 63, 64, 65) et la bande sans fin (33) de manière telle que, lors de la coupe, la bande de fibres (15) soit coupée par la lame (62, 63, 64, 65) qui pénètre d'une profondeur prédéterminée dans la bande sans fin.

5. Dispositif selon la revendication 4, caractérisé par le fait qu'il est prévu chaque fois un accouplement magnétique (74, 77, 80, 81) pour l'entraînement des cylindres porte-lames (58, 59, 60, 61).
